# EUROPEAN PATENT APPLICATION

(11) **EP 3 564 611 A1**
(43) Date of publication of application: **06.11.2019**
(21) Application number: 19172684.3
(22) Date of filing: 06.05.2019
(51) Int. Cl.: F28D 7/16, F28F 1/02, F28F 1/12, B21D 53/02, B23K 26/00

(54) **METHOD OF FABRICATING HEAT EXCHANGER WITH MICRO TUBES AND FINS**

(30) Priority: 04.05.2018 US 201815971248
(71) Applicant: Hamilton Sundstrand Corporation, Charlotte, NC 28217-4578 (US)
(72) Inventor: PEARSON, Matthew Robert, Hartford, CT 06103 (US); MEUSEL, Adam S., Newington, CT 06111 (US); RAMPONE, Joseph C., Colchester, CT 06415 (US)
(74) Representative: Dehns

(57) **Abstract**

A method of manufacturing a heat exchanger includes providing a first plurality of micro-tubes (32), wherein each micro-tube has a first side (60) and a second side (62) extending along a first axis, and providing a first plurality of fins (30), wherein each fin having a first base (40) having a first face (50) and a second face (52) disposed opposite the first face. The method further includes disposing the first side of each micro-tube of the first plurality of micro-tubes on the first face of the first base of the first plurality of fins and joining an entire length of the first side of each micro-tube of the first plurality of micro-tubes to the first face of the first base of the first plurality of fins to define a first heat exchanger layer.

## Description

### BACKGROUND

Exemplary embodiments pertain to the art of fabricating heat exchangers having micro-tubes.

Heat exchangers may be provided with refrigerant systems, such as condensers or evaporators. These heat exchangers have seen reductions in material volume and refrigerant charges. The micro-tubes may be utilized with the heat exchanger to help achieve the reductions in material volume and refrigerant charges and improve overall.

### BRIEF DESCRIPTION

Disclosed is a method of manufacturing a heat exchanger. The method includes providing a first plurality of micro-tubes, wherein each micro-tube has a first side and a second side extending along a first axis, and providing a first plurality of fins, wherein each fin having a first base having a first face and a second face disposed opposite the first face. The method further includes disposing the first side of each micro-tube of the first plurality of micro-tubes on the first face of the first base of the first plurality of fins and joining an entire length of the first side of each micro-tube of the first plurality of micro-tubes to the first face of the first base of the first plurality of fins to define a first heat exchanger layer.

Also disclosed is a micro-channel or micro-tube heat exchanger. The heat exchanger includes a first exchanger layer and a second heat exchanger layer joined to the first heat exchanger layer. The first heat exchanger layer includes a first fin and a first micro-tube. The first fin is provided with a first base having a first face and a second face disposed opposite the first face. The first micro-tube having a first side and a second side extending along a first axis. The first side of the first micro-tube is joined to the first face of the first fin. The second heat exchanger layer includes a second fin and a second plurality of micro-tubes. The second fin is provided with a second base having a first face and a second face disposed opposite the first face. Each micro-tube of the second plurality of micro-tubes having a first side and a second side extending along a second axis that is offset from the first axis. The first side of the second plurality of micro-tubes being joined to the first face of the second fin.

### BRIEF DESCRIPTION OF THE DRAWINGS

The following descriptions should not be considered limiting in any way. With reference to the accompanying drawings, like elements are numbered alike:
FIG. 1A is a perspective view of a portion of a heat exchanger having the plurality of micro-tubes;
FIG. 1B is a zoomed in view of a portion of the heat exchanger of FIG. 1A; and
FIGS. 2A-2C are views of a method of manufacturing the heat exchanger.

### DETAILED DESCRIPTION

A detailed description of one or more embodiments of the disclosed apparatus and method are presented herein by way of exemplification and not limitation with reference to the Figures.

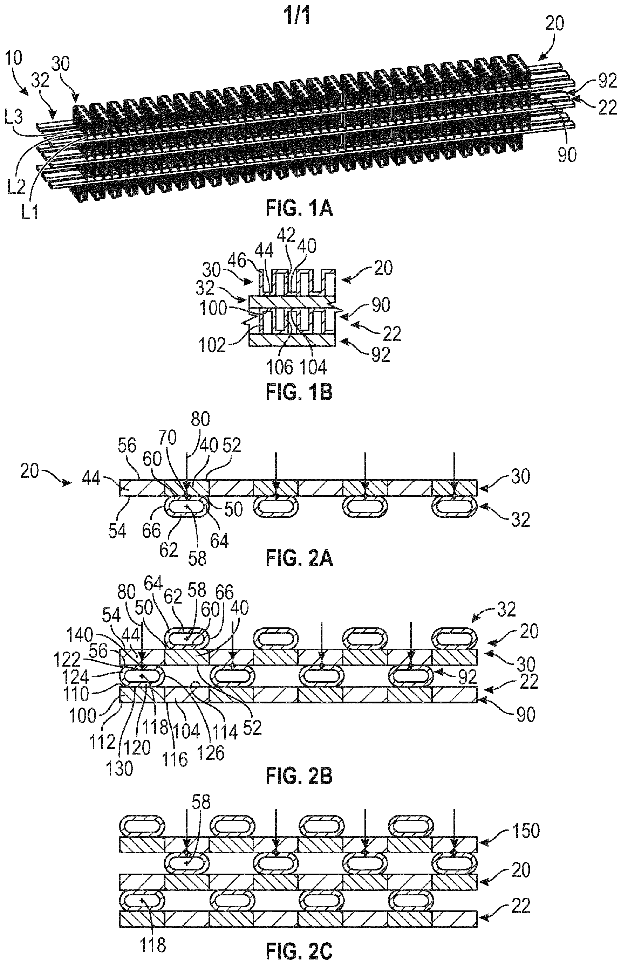

Referring to FIG. 1A, a portion of a micro-channel or micro-tube heat exchanger 10 is shown. The heat exchanger 10 includes a plurality of layers that are individually stacked upon each other and joined to each other. The heat exchanger 10 includes a first heat exchanger layer 20, a second heat exchanger layer 22 joined to the first heat exchanger layer 20, and in some embodiments, additional heat exchanger layers may be joined to the first heat exchanger layer 20 and/or second heat exchanger layer 22 to further assemble the heat exchanger 10.

The first heat exchanger layer 20 includes a first plurality of fins 30 and a first plurality of micro-tubes 32 that are joined to or coupled to the first plurality of fins 30.

The first plurality of fins 30 may be arranged as lanced offset fins, louvered fins, wavy, straight, or other type of fin. Each fin of the first plurality of fins 30 having a first base 40 and a first wall 42 extending from the first base 40 and a second base 44 and a second wall 46 extending from the second base 44, as shown in FIG. 1B.

The first base 40 is provided with a first base first face 50 and a first base second face 52 disposed opposite the first base first face 50, as shown in FIGS. 2A-2C. The second base 44 is offset or spaced apart from the first base 40 and is provided with a second base first face 54 and a second base second face 56 disposed opposite the second base first face 54.

Each micro-tube of the first plurality of micro-tubes 32 extends along a first axis 58, as shown in FIGS. 2A and 2B. Each micro-tube of the first plurality of micro-tubes 32 includes a first side 60, a second side 62, a first arcuate side 64, and a second arcuate side 66, each side extending along the first axis 58. The first side 60 is disposed on the first base first face 50 of the first base 40 of the first plurality of fins 30. The first side 60 is shown as flat, however other shapes are also contemplated. A first interface 70 is defined between the first side 60 of each micro-tube the first plurality of micro-tubes 32 and the first base first face 50 of the first base 40 of the first plurality of fins 30.

The second side 62 is disposed opposite the first side 60. The second side 62 is shown as being flat, however other shapes are also contemplated. The first arcuate side 64 extends between first ends of the first side 60 and the second side 62. The second arcuate side 66 is disposed opposite the first arcuate side 64 and extends between second ends of the first side 60 and the second side 62. Other shapes are also contemplated for the first arcuate side 64 and the second arcuate side 66.

Each micro-tube of the first plurality of micro-tubes 32 is joined to the first base 40 of the first plurality of fins 30 along substantially, an entire length of the first side 60 of each micro-tube, to define the first heat exchanger layer 20. Each micro-tube of the first plurality of micro-tubes 32 may be joined to the first base 40 of the first plurality of fins 30 using a laser welding process.

The laser welding process includes focusing laser pulses or a beam 80 of laser pulses towards the first base second face 52 opposite but aligned with the first interface 70, as shown in FIG. 2A. The laser welding process may include pulsing a laser in a non-continuous manner and staggered along a length of the heat exchanger 10. Referring to FIG. 1A, the beam 80 may be pulsed along a first length, L1, of the first plurality of fins 30 along the first axis 58. The beam 80 may cease being pulsed along a second length, L2, of the first plurality of fins 30 along the first axis 58. The beam 80 may be pulsed along a third length of the first plurality of fins 30, such that the second length is disposed between the first length and the third length.

The second heat exchanger layer 22 includes a second plurality of fins 90 and a second plurality of micro-tubes 92 that are joined to or coupled to the second plurality of fins 90.

The second plurality of fins 90 may have an arrangement that is substantially similar to the first plurality of fins 30. Each fin of the second plurality of fins 90 having a first base 100 and a first wall 102 extending from the first base 100 and a second base 104 and a second wall 106 extending from the second base 104.

The first base 100 is provided with a first base first face 110 and a first base second face 112 disposed opposite the first base first face 110, as shown in FIGS. 2B and 2C. The second base 104 is offset or spaced apart from the first base 100 and is provided with a second base first face 114 and a second base second face 116 disposed opposite the second base first face 114.

Each micro-tube of the second plurality of micro-tubes 92 extends along a second axis 118 that is offset from the first axis 58. Each micro-tube of the second plurality of micro-tubes 92 includes a first side 120, a second side 122, a first arcuate side 124, and a second arcuate side 126, each side extending along the second axis 118.

The first side 120 is disposed on the first base first face 110 of the first base 100 of the second plurality of fins 90. An interface 130 is defined between the first side 120 of each micro-tube the second plurality of micro-tubes 92 and the first base first face 110 of the first base 100 of the second plurality of fins 90. The first side 120 is shown as flat, however other shapes are also contemplated.

The second side 122 is disposed opposite the first side 120. The second side 122 is shown as being flat, however other shapes are also contemplated. The first arcuate side 124 extends between first ends of the first side 120 and the second side 122. The second arcuate side 126 is disposed opposite the first arcuate side 124 and extends between second ends of the first side 120 and the second side 122. Other shapes are also contemplated for the first arcuate side 124 and the second arcuate side 126.

Each micro-tube of the second plurality of micro-tubes 92 are joined to the first base 100 of the second plurality of fins 90 along substantially, an entire length of the first side 120 of each micro-tube, to define the second heat exchanger layer 22. Each micro-tube of the second plurality of micro-tubes 92 may be joined to the first base 100 of the second plurality of fins 90 using a laser welding process. The laser welding process includes focusing laser pulses or a beam of laser pulses towards the second base second face 116 opposite but aligned with the interface 130. The beam 80 may be pulsed along a length of the first base 100 of a fin of the second plurality of fins 90 along the second axis 118.

The first heat exchanger layer 20 may be rotated or inverted relative to the second heat exchanger layer 22 and then disposed on the second heat exchanger layer 22, as shown in FIG. 2B. The second base second face 56 of the second base 44 of the first plurality of fins 30 is disposed on the second side 122 of the second plurality of micro-tubes 92. A second interface 140 is defined between the second side 122 of the second plurality of micro-tubes 92 and the second base second face 56 of the second base 44 of the first plurality of fins 30.

The first heat exchanger layer 20 and the second heat exchanger layer 22 are offset from each other or shifted relative to each other, such that a first micro-tube of the first plurality of micro-tubes 32 is disposed between adjacent micro-tubes of the second plurality of micro-tubes 92 due to the offsetting of the first axis 58 from the second axis 118, as shown in FIGS. 2B and 2C.

The first heat exchanger layer 20 may be joined to the second heat exchanger layer 22 using a laser welding process. The laser welding process includes focusing laser pulses or a beam 80 of laser pulses towards the second base first face 54 opposite but aligned with the second interface 140. The beam 80 may be pulsed along a length of the second base 44 of the first plurality of fins 30 along the second axis 118, as shown in FIG. 2B. In at least one embodiment, a braze alloy may have been provided on at least one of the first plurality of fins 30 and/or the second plurality of fins 90 and the first plurality of micro-tubes 32 and/or the second plurality of micro-tubes 92. The braze alloy may be provided to permit a lower-energy laser pulse as compared to the braze alloy not being provided.

The first heat exchanger layer 20 may alternatively be joined to the second heat exchanger layer 22 using a furnace brazing process. In such an embodiment, at least one of the first plurality of micro-tubes 32 and/or the second plurality of micro-tubes 92 is coated or cladded with a braze alloy or a braze alloy or braze filler may be disposed at the second interface 140. In other embodiments, at least one of the first plurality of fins 30 and/or the second plurality of fins 90 is coated or cladded with a braze alloy or a braze alloy or braze filler may be disposed at the second interface 140.

As shown in FIG. 2C, additional heat exchanger layers 150 may be joined to at least one of the first heat exchanger layer 20 and/or the second heat exchanger layer 22. The additional heat exchanger layers 150 may be laser welded using a similar method as described above or a furnace brazing process to be joined to at least one of the first heat exchanger layer 20 and/or the second heat exchanger layer 22.

The stacking of individual heat exchanger layers and welding the heat exchanger layers to each other by firing a laser between the micro-tubes and between the fins, due to the shifting of the micro-tubes relative to each layer provides better control over fins deformation and tube alignment. Furthermore, the larger contact area without the presence of a lower thermal conductivity braze alloy at the joint or interface between the micro-tubes and the base of the fins improves the thermal performance of the heat exchanger 10. As well, the rapid, localized heating of a laser weld joint may deliver significant energy savings and cost savings relative to a braze furnace cycle. Other benefits may also include: reduced scrap rates where imperfectly brazed coils must be repaired or scrapped; ability to automate the stacking and welding process through robotics and automation; ability to create one-off or prototype units whereas with conventional brazing several units must often be built and scrapped while the brazing process is tuned and perfected; and if no braze clad is used, there may be corrosion benefits, i.e. longer heat exchanger life.

The term "about" is intended to include the degree of error associated with measurement of the particular quantity based upon the equipment available at the time of filing the application.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made and equivalents may be substituted for elements thereof without departing from the scope of the invention as defined by the claims. In addition, many modifications may be made to adapt a particular situation or material to the teachings of the present disclosure without departing from the scope of the invention. Therefore, it is intended that the present disclosure not be limited to the particular embodiment disclosed as the best mode contemplated for carrying out this present disclosure, but that the present disclosure will include all embodiments falling within the scope of the claims.

## Claims

1. A method of manufacturing a heat exchanger, comprising the steps of:
providing a first plurality of micro-tubes (32), each micro-tube having a first side (60) and a second side (62) extending along a first axis;
providing a first plurality of fins (30), each fin having a first base (40) having a first face (50) and a second face (52) disposed opposite the first face;
disposing the first side of each micro-tube of the first plurality of micro-tubes on the first face of the first base of the first plurality of fins; and
joining an entire length of the first side of each micro-tube of the first plurality of micro-tubes to the first face of the first base of the first plurality of fins to define a first heat exchanger layer.

2. The method of claim 1, wherein a first interface is defined between the first side of each micro-tube of the first plurality of micro-tubes and the first face of the first base of the first plurality of fins.

3. The method of claim 2, wherein the step of joining includes:
focusing a beam (80) of laser pulses towards the second face of the first base of the first plurality of micro-tubes opposite the first interface.

4. The method of claim 3, wherein the step of joining further includes:
pulsing the laser along a first length (L1) of the first plurality of fins.

5. The method of claim 4, wherein the step of joining further includes:
ceasing pulsing the laser along a second length of the first plurality of fins disposed adjacent to the first fin of the first plurality of fins.

6. The method of claim 5, wherein the step of joining further includes:
pulsing the laser along a third length of the first plurality of fins.

7. The method of claim 3, further comprising:
providing a second plurality of micro-tubes (92), each micro-tube of the second plurality of micro-tubes having a first side (120) and a second side (122) extending along a second axis;
providing a second plurality of fins (90), each fin of the second plurality of fins having a first base (100) having a first face (110) and a second face (112) disposed opposite the first face;
disposing the first side of each micro-tube of the second plurality of micro-tubes on the first face of the first base of the second plurality of fins; and
joining an entire length of the first side of each micro-tube of the second plurality of micro-tubes to the first face of the first base of the second plurality of fins to define a second heat exchanger layer.

8. The method of claim 7, further comprising:
disposing the second face of the first base of the first plurality of fins of the first heat exchanger layer on the second side of each micro-tube of the second plurality of micro-tubes.

9. The method of claim 8, wherein a second interface is defined between the second side of each micro-tube of the second plurality of micro-tubes and the second face of the first base of the first plurality of fins.

10. The method of claim 9, further comprising:
joining the first heat exchanger layer (20) to the second heat exchanger layer (22) along the second interface.

11. The method of claim 10, wherein the step of joining the first heat exchanger layer to the second heat exchanger layer includes:
focusing a beam of laser pulses towards the first face of the second base of the second plurality of fins opposite the second interface.

12. The method of claim 11, wherein the step of joining the first heat exchanger layer to the second heat exchanger layer further includes:
pulsing the laser along a length of the first plurality of fins.

13. The method of claim 10, wherein the step of joining the first heat exchanger layer to the second heat exchanger layer includes:
brazing the first heat exchanger layer to the second heat exchanger layer.

14. A micro-channel or micro-tube heat exchanger, comprising:
a first heat exchanger layer (20), including:
a first fin (30) provided with a first base (40) having a first face (50) and a second face (52) disposed opposite the first face, and
a first micro-tube (32) having a first side (60) and a second side (62) extending along a first axis, the first side of the first micro-tube being joined to the first face of the first fin; and
a second heat exchanger layer (22) joined to the first heat exchanger layer, the second heat exchanger layer, including:
a second fin provided with a second base having a first face and a second face disposed opposite the first face, and
a plurality of micro-tubes, each micro-tube of the plurality of micro-tubes having a first side and a second side extending along a second axis that is offset from the first axis, the first side of the second plurality of micro-tubes being joined to the first face of the second fin.

15. The heat exchanger of claim 14, wherein the first heat exchanger layer and the second heat exchanger layer are offset from each other, such that the first micro-tube is disposed between adjacent micro-tubes of the plurality of micro-tubes.
